# EUROPEAN PATENT SPECIFICATION

(11) **EP 2 562 908 B1**
(45) Date of publication and mention of the grant of the patent: **09.10.2019**
(21) Application number: 12769301.8
(22) Date of filing: 27.03.2012
(51) Int. Cl.: H02J 7/02

(54) **WIRELESS CHARGING STRENGTH INDICATION METHOD AND CHARGED DEVICE**
VERFAHREN ZUR ANZEIGE DER STÄRKE EINER DRAHTLOSEN AUFLADUNG UND AUFGELADENE VORRICHTUNG
PROCÉDÉ D'INDICATION DE RÉSISTANCE DE CHARGE SANS FIL ET DISPOSITIF CHARGÉ

(30) Priority: 27.09.2011 CN 201110296809
(43) Date of publication of application: 27.02.2013
(73) Proprietor: Huawei Technologies Co., Ltd., Longgang District Shenzhen, Guangdong 518129 (CN)
(72) Inventor: WU, Hao, Shenzhen Guangdong 518129 (CN); HUANG, Kangmin, Shenzhen Guangdong 518129 (CN); ZHENG, Yulin, Shenzhen Guangdong 518129 (CN); DING, Haitao, Shenzhen Guangdong 518129 (CN)
(74) Representative: Körber, Martin Hans
(86) International application number: PCT/CN2012/073133
(87) International publication number: WO 2012/163161

(56) References cited:
- WO-A1-2010/042057
- CN-A- 101 669 265
- CN-A- 101 860 046
- CN-A- 101 950 999
- JP-A- 2006 203 997
- US-A1- 2008 061 733
- US-A1- 2009 153 098
- US-A1- 2010 081 378
- US-A1- 2010 156 347
- WANG, XIAOJING: 'The Study of Wireless Charging System Based on RFID Technology' CHINA MASTER'S THESES FULL-TEXT DATABASE 31 December 2008, pages 34 - 35, XP008171562

## Description

### FIELD OF THE INVENTION

The present invention relates to the field of wireless charging technologies, and in particular, to a wireless charging intensity indication method and a charged device.

### BACKGROUND OF THE INVENTION

As a technology emerging in recent years, wireless charging can supply power to a charged device in a wireless mode. The principle of wireless charging is as follows. A wireless charging device includes one or more transmitting coils that can transmit electrical energy in a wireless mode, and the charged device has at least one receiving coil that can receive the electrical energy, so that wireless charging is implemented.

One or more charged devices may be placed on one wireless charging device, and wireless charging may be provided for the one or more charged devices at one time. Because the distance, direction, and size of the receiving coil of the charged device relative to the transmitting coil of the wireless charging device are different, the efficiency of wireless charging is different, that is, if the charging position of the charged device on the wireless charging device is different, the efficiency of wireless charging is different.

In the prior art, by drawing up in advance the optimum charging position and direction of the charged device on the wireless charging device, the charged device determines the charging position according to the indication. However, because charging devices are diversified, the indication method lacks adaptability.

JP 2006-203997 A disclosed a wireless charging intensity indication method and a charged device according to the preambles of claims 1 and 6, respectively.

### SUMMARY OF THE INVENTION

The present invention provides a wireless charging intensity indication method, so that it is convenient for a user to find an optimum charging position, and the efficiency of wireless charging can be improved. A corresponding charged device is also provided.

According to the first aspect of the present invention a wireless charging intensity indication method is defined in claim 1.

According to the second aspect of the present invention a charged device is defined in claim 6.

Advantageous features are defined in the respective dependent claims.

The present invention makes use of the charged device to obtain the wireless charging intensity of the charged device at the present charging position, and display, on the display screen, the wireless charging intensity at the present charging position, where the displaying the wireless charging intensity on the display screen is intended to provide the basis for the user to select the optimum charging position. As compared with the prior art, by using the wireless charging intensity indication method provided by the present invention, the user may select, from different charging positions, the optimum charging position according to the magnitude of the wireless charging intensity displayed on the display screen of the charged device, thereby improving the efficiency of wireless charging.

### BRIEF DESCRIPTION OF THE DRAWINGS

FIG. 1 is a schematic diagram of an example of a wireless charging intensity indication method;
FIG. 2 is a schematic diagram of an embodiment of a wireless charging intensity indication method according to the present invention;
FIG. 3 is a schematic diagram of an example of a charged device;
FIG. 4 is a schematic diagram of another example of a charged device;
FIG. 5 is a schematic diagram of an embodiment of a charged device according to the present invention;
FIG. 6 is a schematic diagram of another embodiment of a charged device according to the present invention; and
FIG. 7 is a schematic diagram of an embodiment of a mobile terminal according to the present invention.

### DETAILED DESCRIPTION OF THE EMBODIMENTS

Embodiments of the present invention provide a wireless charging intensity indication method, so that it is convenient for a user to find an optimum charging position, and the efficiency of wireless charging can be improved. The embodiments of the present invention also provide a corresponding charged device. The embodiments of the present invention are hereinafter described in detail respectively.

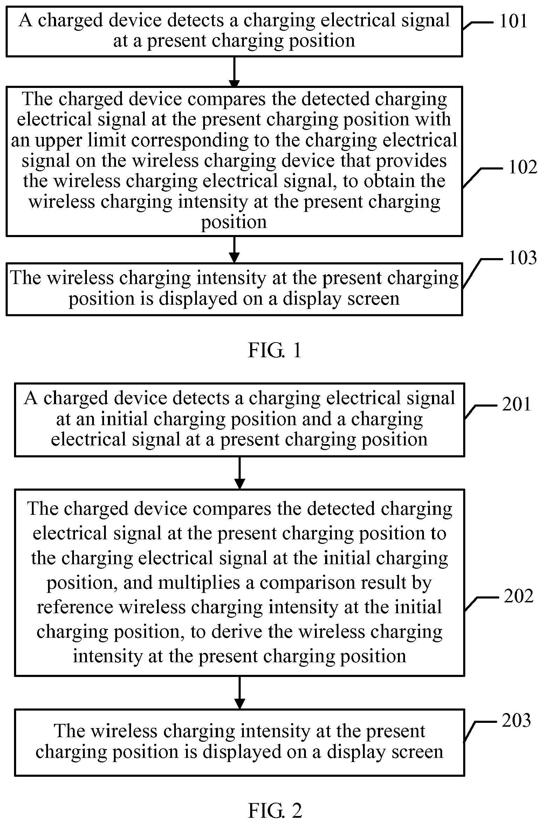

Referring to FIG. 1, an example of a wireless charging intensity indication method necessary for understanding the present invention includes the following steps:
101. A charged device detects a charging electrical signal at a present charging position.
   Tthe wireless charging device charges the charged device after a wireless charging function is enabled. Because the type and shape of the charged device may vary, the optimum wireless charging position with the strongest charging intensity and highest charging efficiency cannot be determined directly. Therefore, after the charged device is placed on the wireless charging device, the charged device detects the charging electrical signal at the present charging position, and according to the charging electrical signal at the present charging position, calculates the charging intensity at the position.
   The charging electrical signal includes the charging current, charging voltage, charging power, or change speed of battery capacity of the charged device.
102. The charged device compares the detected charging electrical signal at the present charging position with an upper limit corresponding to the charging electrical signal on the wireless charging device that provides the wireless charging electrical signal, to obtain the wireless charging intensity at the present charging position.

If the charging current at the present charging position is detected in step 101, the charging current at the present charging position is compared with an upper limit of the charging current on the charging device, and the comparison result (e.g., the percentage of the present charging current to the upper limit of the charging current) is regarded as the charging intensity at the present charging position. If it is detected that the charging current at the present charging position is 0.5 A, and the upper limit of the charging current on the charging device is 1 A, 0.5/1 = 50%, that is, the charging intensity at the present charging position is 50%.

Similarly, if the voltage is detected in step 101, the charging voltage at the present charging position is compared with an upper limit of the charging voltage on the charging device, and the comparison result (e.g., the percentage of the present charging voltage to the upper limit of the charging voltage) is regarded as the charging intensity at the present charging position.

If both the charging current at the present charging position and the charging voltage at the present charging position are detected in step 101, charging power at the present charging position can be calculated, the charging power at the present charging position is compared with an upper limit of the charging power on the charging device, and the comparison result (e.g., the percentage of the present charging power to the upper limit of the charging power) is regarded as the charging intensity at the present charging position.

In addition, the change speed of the battery capacity (that is, the increased battery current within a unit of time) of the charged device in a charging state may also be detected in step 101, the change speed of the battery capacity is compared with an upper limit of the change speed of the battery capacity on the charging device, and the comparison result (e.g., the percentage of the present change speed of the battery capacity to the upper limit of the change speed of the battery capacity) is regarded as the charging intensity at the present charging position.

103. Display the wireless charging intensity at the present charging position on a display screen.

After the wireless charging intensity at the present charging position is calculated in step 102, that is, after the charged device obtains the wireless charging intensity, the wireless charging intensity is displayed on the display screen of the charged device.

On a display interface of the charged device, a small icon may be used to indicate whether the wireless charging function is enabled. By clicking the small icon, or clicking a large wireless charging management icon below, or clicking a corresponding menu item on a user operation menu, the user can view the display interface of the wireless charging intensity, where the displaying the wireless charging intensity may be as follows: the wireless charging intensity at the present charging position is presented on the display screen in a static or dynamic graphical mode.

The static graphical mode includes a scale mode or an incremental column mode. For example, there is an indicator bar on the display interface; the indicator bar, in a state of being filled, identifies the charging intensity; and the specific numerical value of the charging intensity may also be given in a digital form on the indicator bar.

The dynamic graphical mode is a display mode in which a graphic element representative of the charging intensity changes constantly according to the magnitude of the charging intensity. For example, the charging state in the indicator bar rolls from left to right; the leftmost position indicates the present battery capacity; and the rolling speed of the indicator bar may be used to indicate the magnitude of the charging intensity visually, that is, the faster the indicator bar rolls, the stronger the charging intensity is, and vice versa.

It should be noted that the above display mode is merely an example. The indicator bar of the charging intensity may be oval or rectangular, or of other shapes; there may or may not be characters above the indicator bar of the charging intensity; the indicator bar of the charging intensity may be in a horizontal mode or a vertical mode, or in other modes, as long as the charging intensity can be displayed, and the specific display mode of the charging intensity is not limited thereto.

In the example, the charged device detects the charging electrical signal at the present charging position, and performs a division operation on the detected charging electrical signal at the present charging position and the upper limit corresponding to the charging electrical signal on the charging device, to derive the wireless charging intensity at the present charging position. After obtaining the wireless charging intensity of the charged device at the present charging position on the wireless charging device, the charged device displays the wireless charging intensity at the present charging position on the display screen. As compared with the prior art, by using the wireless charging intensity indication method provided by the example, the user may select, from different charging positions, the optimum charging position according to the magnitude of the charging intensity displayed on the display screen, thereby improving the efficiency of wireless charging.

Referring to FIG. 2, an embodiment of a wireless charging intensity indication method according to the present invention includes the following steps:
201. A charged device detects a charging electrical signal at an initial charging position and a charging electrical signal at a present charging position.
202. The charged device compares the detected charging electrical signal at the present charging position to the charging electrical signal at the initial charging position, and multiplies a comparison result by reference wireless charging intensity at the initial charging position, to derive the wireless charging intensity at the present charging position.
   When there is no upper limit value of the charging electrical signal on a charging device, after the charging electrical signal at the initial charging position is detected, the charging electrical signal at the initial charging position is stored; the wireless charging intensity corresponding to the charging electrical signal at the initial charging position is regarded as a reference value of the wireless charging intensity (e.g., 50%); a division operation is performed on the charging electrical signal at the present charging position and the charging electrical signal at the initial charging position, to derive a calculation result; and the calculation result is multiplied by the reference value of the wireless charging intensity, to derive the wireless charging intensity at the present charging position. For example, the charging current at the initial charging position is 0.5 A, and the reference value of the charging intensity is 50%. After the charged device is moved to another position, it is detected that the current intensity at the present charging position is 0.6 A, and it is derived through calculation that the current intensity at the present charging position is 60%.
203. Display the wireless charging intensity at the present charging position on a display screen.

After obtaining the wireless charging intensity of the charged device at the present charging position, the charged device displays the wireless charging intensity on the display screen.

In the embodiment of the present invention, if there is no upper limit value of the charging electrical signal on the charging device, the charged device is used to detect the charging electrical signal at the present charging position; perform the division operation on the detected charging electrical signal at the present charging position and the charging electrical signal at the initial charging position, to derive the calculation result; multiply the calculation result by the reference value of the wireless charging intensity corresponding to the initial charging position, to derive the wireless charging intensity at the present charging position; and after obtaining the wireless charging intensity of the charged device at the present charging position on the wireless charging device, display the wireless charging intensity at the present charging position on the display screen. As compared with the prior art, by using the wireless charging intensity indication method provided by the embodiment of the present invention, a user may select, from different charging positions, the optimum charging position according to the magnitude of the charging intensity displayed on the display screen, thereby improving the efficiency of wireless charging.

For better understanding, a specific application scenario is taken as an example hereinafter to describe the wireless charging intensity indication method of the present invention in detail.

When a charged device (a mobile phone is taken as an example in this application scenario) is placed on the wireless charging device, the mobile phone obtains a charging current of 0.3 A at a first charging position, and as the upper limit of the charging current on the wireless charging device is 1 A, performs a division operation on the charging current at the first charging position of the mobile phone and the upper limit of the charging current on the wireless charging device, to derive that the percentage of the calculation result is 30%, that is, the wireless charging intensity is 30%. When the mobile phone is moved horizontally on the wireless charging device, the mobile phone obtains a charging current of 0.5 A at a second charging position, and compares 0.5 A with 1 A, to derive that the percentage of the comparison result is 50%, that is, the wireless charging intensity is 50%. When the mobile phone is rotated by an angle at the second charging position, it may be considered that the mobile phone is moved to a third charging position, and the mobile phone obtains a charging current of 0.7 A at the third charging position, and compares 0.7 A with 1 A, to derive that the percentage of the comparison result is 70%, that is, the wireless charging intensity is 70%. The optimum charging position is determined as the third charging position according to the wireless charging intensity indication. The user may also move the mobile phone to some other positions, and find the position where the charging intensity is the strongest to implement wireless charging, thereby improving the efficiency of wireless charging.

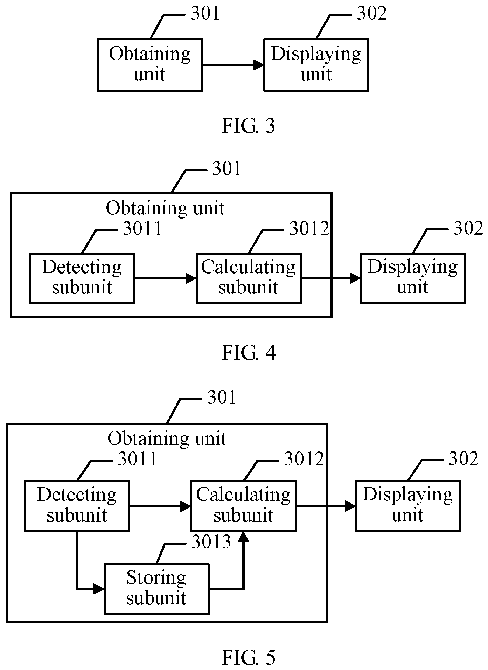

Referring to FIG. 3, an example of a charged device necessary for understanding the present invention includes: an obtaining unit 301 and a displaying unit 302.

The obtaining unit 301 is configured to obtain wireless charging intensity of the charged device at a present charging position.

The displaying unit 302 is configured to display the wireless charging intensity at the present charging position after the obtaining unit 301 obtains the wireless charging intensity at the present charging position, where the displaying the wireless charging intensity on a display screen is intended to provide a basis for a user to select an optimum charging position.

In the example of the present invention, after the obtaining unit 301 obtains the wireless charging intensity of the charged device at the present charging position, the displaying unit 302 displays the wireless charging intensity at the present charging position, where the displaying the wireless charging intensity on the display screen is intended to provide the basis for the user to select the optimum charging position. As compared with the prior art, by using the wireless charging intensity indication method provided by the example, the user may select, from different positions, the optimum charging position according to the magnitude of the charging intensity displayed on the display screen, thereby improving the efficiency of wireless charging.

Based on the above example corresponding to FIG. 3, referring to FIG. 4, the obtaining unit 301 according to an example necessary for understanding the present invention includes a detecting subunit 3011 and a calculating subunit 3012.

The detecting subunit 3011 is configured to detect a charging electrical signal at the present charging position.

The calculating subunit 3012 is configured to, after the detecting subunit 3011 detects the charging electrical signal at the present charging position, compare the detected charging electrical signal at the present charging position with an upper limit corresponding to the charging electrical signal on a wireless charging device that provides the wireless charging electrical signal, to obtain the wireless charging intensity at the present charging position.

In the example of the present invention, the detecting subunit 3011 detects the charging electrical signal at the present charging position, and the calculating subunit 3012 performs a division operation on the detected charging electrical signal at the present charging position and the upper limit corresponding to the charging electrical signal on the wireless charging device, to obtain the wireless charging intensity at the present charging position. After the obtaining unit 301 obtains the wireless charging intensity of the charged device at the present charging position on the wireless charging device, the displaying unit 302 displays the wireless charging intensity at the present charging position. As compared with the prior art, by using the wireless charging intensity indication method provided by the example, the user may select, from different positions, the optimum charging position according to the magnitude of the charging intensity displayed on the display screen, thereby improving the efficiency of wireless charging.

Based on the above example corresponding to FIG. 3, referring to FIG. 5, the obtaining unit 301 in an embodiment of the present invention also includes the detecting subunit 3011, the calculating subunit 3012, and a storing subunit 3013.

The detecting subunit 3011 is configured to detect a charging electrical signal at an initial charging position and the charging electrical signal at the present charging position.

The calculating subunit 3012 is also configured to, after the detecting subunit 3011 detects the charging electrical signal at the present charging position, compare the detected charging electrical signal at the present charging position to the charging electrical signal at the initial charging position, and multiply a comparison result by reference wireless charging intensity at the initial charging position, to obtain the wireless charging intensity at the present charging position.

The storing subunit 3013 is configured to store the charging electrical signal at the initial charging position after the detecting subunit 3011 detects the charging electrical signal at the initial charging position, when the present charging position is the initial charging position.

In the embodiment of the present invention, after the detecting subunit 3011 detects the charging electrical signal at the initial charging position, the storing subunit 3013 stores the charging electrical signal at the initial charging position. After the charged device is moved to another position, the detecting subunit 3011 detects the charging electrical signal at the present charging position; and the calculating unit .3012 compares the detected charging electrical signal at the present charging position to the charging electrical signal at the initial charging position, and multiplies the comparison result by the reference wireless charging intensity at the initial charging position, to obtain the wireless charging intensity at the present charging position. After the obtaining unit 301 obtains the wireless charging intensity of the charged device at the present charging position on the wireless charging device, the displaying unit 302 displays the wireless charging intensity at the present charging position. As compared with the prior art, by using the charged device provided by the embodiment of the present invention, the user may select, from different positions, the optimum charging position according to the magnitude of the charging intensity displayed on the display screen, thereby improving the efficiency of wireless charging.

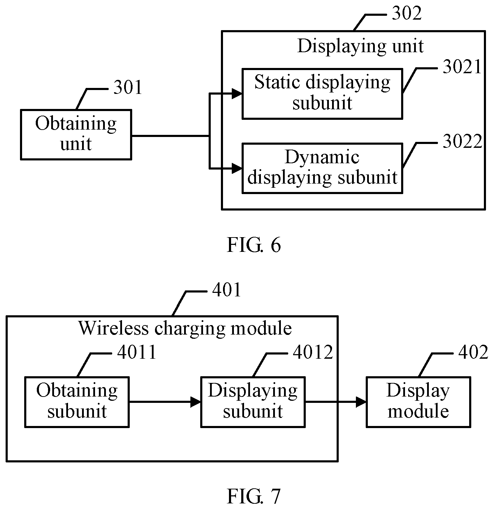

Referring to FIG. 6, based on any one of the above embodiments in FIGs. 3 to 5, the displaying unit 302 in an embodiment of the present invention includes a static displaying subunit 3021 and a dynamic displaying subunit 3022.

The static displaying subunit 3021 is configured to present, on the display screen in a static graphical mode, the wireless charging intensity at the present charging position.

The dynamic displaying subunit 3022 is configured to present, on the display screen in a dynamic graphical mode, the wireless charging intensity at the present charging position.

The static graphical mode includes a scale mode or an incremental column mode, and the dynamic graphical mode is a display mode in which a graphic element representative of the charging intensity changes constantly according to the magnitude of the charging intensity.

In the embodiment of the present invention, after the obtaining unit 301 obtains the wireless charging intensity, the static displaying subunit 3021 in the displaying unit 302 may present the wireless charging intensity on the display screen in the static graphical mode, and the dynamic displaying subunit may present the wireless charging intensity on the display screen in the dynamic graphical mode. As compared with the prior art, by using the wireless charging intensity indication method provided by the embodiment of the present invention, the user may select, from different positions, the optimum charging position according to the magnitude of the charging intensity displayed on the display screen, thereby improving the efficiency of wireless charging.

Referring to FIG. 7, an embodiment of a mobile terminal according to the present invention includes: a display module 402 and a wireless charging module 401. The wireless charging module includes:
an obtaining subunit 4011, configured to obtain wireless charging intensity of the mobile terminal at a present charging position; and
a displaying subunit 4012, configured to represent the wireless charging intensity in a graphical mode and display the intensity through the display module 402, after the obtaining subunit 4011 obtains the wireless charging intensity at the present charging position.

By using the mobile terminal in the embodiment of the present invention, the obtaining subunit 4011 in the wireless charging module 401 obtains the wireless charging intensity of the mobile terminal at the present charging position, and the displaying subunit 4012 represents the wireless charging intensity in a graphical mode and displays the intensity through the display module 402. By using the mobile terminal provided by the embodiment of the present invention, a user may select, from different positions, the optimum charging position according to the magnitude of the charging intensity displayed on the display module, thereby improving the efficiency of wireless charging.

The mobile terminal may be a mobile phone, a tablet computer, a notebook computer, an MP3 player, an MP4 player, a digital photo frame, a digital camera, a projection device, a set-top box, a flat panel TV, a display, a speaker, an interphone, a navigator, a game machine, a mouse, and the like.

Persons of ordinary skill in the art may understand that all or part of the steps of the method according to the above embodiments may be implemented by a program instructing relevant hardware. The program may be stored in a computer readable storage medium. The storage medium may include a ROM, a RAM, a magnetic disk, or a CD-ROM, and the like.

The wireless charging intensity indication method and the charged device provided by the embodiments of the present invention are hereinbefore described in detail. Although the principle and implementation of the present invention are described in detail with reference to exemplary embodiments herein, the description of the above embodiments is merely used to help understand the method and the core idea of the present invention. To sum up, the specification should not be construed as limitations on the present invention.

## Claims

1. A wireless charging intensity indication method, comprising:
obtaining, by a charged device, wireless charging electrical signal intensity of the charged device at a present charging position, and
displaying (203), on a display screen of the charged device, the wireless charging electrical signal intensity at the present charging position, wherein the step of displaying the wireless charging electrical signal intensity on the display screen is intended to provide a basis for a user to select a charging position,
**characterized in that** the step of obtaining, by the charged device, the wireless charging electrical signal intensity of the charged device at the present charging position comprises:
detecting (201), by the charged device, a charging electrical signal at an initial charging position and the charging electrical signal at the present charging position; and
performing, by the charged device, a division operation on the detected charging electrical signal at the present charging position and the charging electrical signal at the initial charging position to derive a calculation result, and multiplying the calculation result by a reference wireless charging electrical signal intensity at the initial charging position, to obtain the wireless charging intensity at the present charging position.

2. The wireless charging intensity indication method according to claim 1, wherein after detecting, by the charged device, the charging electrical signal at the initial charging position, the method further comprises:
storing, by the charged device, the charging electrical signal at the initial charging position.

3. The wireless charging intensity indication method according to claim 1 or 2, wherein the charging electrical signal comprises a charging current, charging voltage, charging power, or change speed of battery capacity of the charged device.

4. The wireless charging intensity indication method according to any one of claims 1 to 3, wherein the step of displaying, on the display screen, the wireless charging intensity at the present charging position specifically comprises:
presenting, on the display screen in a static or dynamic graphical mode, the wireless charging electrical signal intensity at the present charging position.

5. The wireless charging intensity indication method according to claim 4, wherein the static graphical mode comprises a scale mode or an incremental column mode, and the dynamic graphical mode is a display mode in which a graphic element representative of the charging electrical signal intensity changes constantly according to a magnitude of the charging electrical signal intensity.

6. A charged device, comprising:
an obtaining unit (301, 4011), configured to obtain wireless charging electrical signal intensity of the charged device at a present charging position; and
a displaying unit (302, 4012), configured to display the wireless charging electrical signal intensity at the present charging position after the obtaining unit obtains the wireless charging electrical signal intensity at the present charging position, wherein the displaying the wireless charging intensity on a display screen is intended to provide a basis for a user to select an optimum charging position,
**characterized in, that** the obtaining unit (301, 4011) comprises:
a detecting subunit (3011), configured to detect a charging electrical signal at an initial charging position and the charging electrical signal at the present charging position; and
a calculating subunit (3012), configured to, after the detecting subunit detects the charging electrical signal at the present charging position, perform a division operation on the detected charging electrical signal at the present charging position and the charging electrical signal at the initial charging position to derive a calculation result, and multiply the calculation result by reference wireless charging intensity at the initial charging position, to obtain the wireless charging intensity at the present charging position.

7. The charged device according to claim 6, wherein the obtaining unit (301, 4011) further comprises:
a storing subunit (3013), configured to store the charging electrical signal electrical signal at the initial charging position after the detecting subunit detects the charging electrical signal electrical signal at the initial charging position, when the present charging position is the initial charging position.

8. The charged device according to claim 6 or 7, wherein the charging electrical signal comprises a charging current, charging voltage, charging power, or change speed of battery capacity of the charged device.

9. The charged device according to any one of claims 6 to 8, wherein the displaying unit (302) comprises:
a static displaying subunit (3021), configured to present, on the display screen in a static graphical mode, the wireless charging electrical signal intensity at the present charging position; and
a dynamic displaying subunit (3022), configured to present, on the display screen in a dynamic graphical mode, the wireless charging electrical signal intensity at the present charging position.

10. The charged device according to claim 9, wherein the static graphical mode comprises a scale mode or an incremental column mode, and the dynamic graphical mode is a display mode in which a graphic element representative of the charging intensity changes constantly according to a magnitude of the charging electrical signal intensity.

11. The charged device according to any one of claims 6 to 10, said charged device being a mobile terminal comprising a display module (402) and a wireless charging module (401), wherein the wireless charging module comprises:
said obtaining unit (4011); and
said displaying unit (4012).

## Patentansprüche

1. Verfahren zum Angeben der Stärke eines kabellosen Aufladens, Folgendes umfassend:
Erfassen, durch eine aufzuladene Vorrichtung, einer elektrischen Signalstärke des kabellosen Aufladens für die aufzuladene Vorrichtung bei einer momentanen Aufladeposition und
Anzeigen (203), auf einem Anzeigebildschirm der aufzuladenen Vorrichtung, der elektrischen Signalstärke des kabellosen Aufladens an der momentanen Aufladeposition, wobei der Schritt des Anzeigens der elektrischen Signalstärke des kabellosen Aufladens auf dem Anzeigebildschirm beabsichtigt, einem Benutzer eine Basis zum Auswählen einer Aufladeposition bereitzustellen,
**dadurch gekennzeichnet, dass** der Schritt des Erlangens, durch die aufzuladene Vorrichtung, der elektrischen Signalstärke des kabellosen Aufladens für die aufzuladene Vorrichtung an der momentanen Aufladeposition Folgendes umfasst:
Detektieren (201), durch die aufzuladene Vorrichtung, eines elektrischen Aufladesignals an einer Ausgangsaufladeposition und des elektrischen Aufladesignals an der momentanen Aufladeposition; und
Durchführen, durch die aufzuladene Vorrichtung, eines Divisionsvorgangs an dem detektierten elektrischen Aufladesignal an der momentanen Aufladeposition und dem elektrischen Aufladesignal an der Ausgangsaufladeposition, um ein Berechnungsergebnis zu ermitteln, und Multiplizieren des Berechnungsergebnisses mit einer elektrischen Bezugssignalstärke des kabellosen Aufladens an der Ausgangsaufladeposition, um die Stärke des kabellosen Aufladens an der momentanen Aufladeposition zu erlangen.

2. Verfahren zum Angeben der Stärke eines kabellosen Aufladens nach Anspruch 1, wobei nach dem Detektieren, durch die aufzuladene Vorrichtung, des elektrischen Aufladesignals an der Ausgangsaufladeposition das Verfahren ferner umfasst:
Speichern, durch die aufzuladene Vorrichtung, des elektrischen Aufladesignals an der Ausgangsaufladeposition.

3. Verfahren zum Angeben der Stärke eines kabellosen Aufladens nach Anspruch 1 oder 2, wobei das elektrische Aufladesignal einen Aufladestrom, eine Aufladespannung, eine Aufladeleistung oder eine Änderungsgeschwindigkeit der Batteriekapazität der aufzuladenen Vorrichtung umfasst.

4. Verfahren zum Angeben der Stärke eines kabellosen Aufladens nach einem der Ansprüche 1 bis 3, wobei der Schritt des Anzeigens, auf dem Anzeigebildschirm, der Stärke des kabellosen Aufladens an der momentanen Aufladeposition spezifisch umfasst:
Darstellen, auf dem Anzeigebildschirm, in einem statischen oder dynamischen Grafikmodus, der elektrischen Signalstärke des kabellosen Aufladens an der momentanen Aufladeposition.

5. Verfahren zum Angeben der Stärke eines kabellosen Aufladens nach Anspruch 4, wobei der statische Grafikmodus einen Skaliermodus oder einen inkrementellen Spaltenmodus umfasst und der dynamische Grafikmodus ein Anzeigemodus ist, bei dem ein grafisches Element, das die elektrische Aufladesignalstärke darstellt, sich gemäß einer Größe der elektrischen Aufladesignalstärke konstant ändert.

6. Aufzuladene Vorrichtung, Folgendes umfassend:
eine Erlangungseinheit (301, 4011), die konfiguriert ist zum Erlangen der elektrischen Signalstärke des kabellosen Aufladens der aufzuladenen Vorrichtung an einer momentanen Aufladeposition; und
eine Anzeigeeinheit (302, 4012), die konfiguriert ist zum Anzeigen der elektrischen Signalstärke des kabellosen Aufladens an der momentanen Aufladeposition, nachdem die Erlangungseinheit die elektrische Signalstärke des kabellosen Aufladens an der momentanen Aufladeposition erlangt hat, wobei das Anzeigen der Stärke des kabellosen Aufladens auf einem Anzeigebildschirm beabsichtigt, einem Benutzer eine Basis zum Auswählen einer optimalen Aufladeposition bereitzustellen, **dadurch gekennzeichnet, dass** die Erlangungseinheit (301, 4011) ferner Folgendes umfasst:
eine Detektionsuntereinheit (3011), die konfiguriert ist zum Detektieren eines elektrischen Aufladesignals bei einer Ausgangsaufladeposition und des elektrischen Aufladesignals an der momentanen Aufladeposition; und
eine Berechnungsuntereinheit (3012), die konfiguriert ist zum Durchführen, nachdem die Detektionsuntereinheit das elektrische Aufladesignal an der momentanen Aufladeposition detektiert hat, eines Divisionsvorgangs an dem detektierten elektrischen Aufladesignal an der momentanen Aufladeposition und dem elektrischen Aufladesignal an der Ausgangsaufladeposition, um ein Berechnungsergebnis zu ermitteln, und Multiplizieren des Berechnungsergebnisses mit einer Bezugsstärke des kabellosen Aufladens an der Ausgangsaufladeposition, um die Stärke des kabellosen Aufladens an der momentanen Aufladeposition zu erlangen.

7. Aufzuladene Vorrichtung nach Anspruch 6, wobei die Erlangungseinheit (301, 4011) ferner umfasst:
eine Speicheruntereinheit (3013), die konfiguriert ist zum Speichern des elektrischen Signals des elektrischen Aufladesignals an der Ausgangsaufladeposition, nachdem die Detektionsuntereinheit das elektrische Signal des elektrischen Aufladesignals an der Ausgangsaufladeposition detektiert hat, wenn die momentane Aufladeposition die Ausgangsaufladeposition ist.

8. Aufzuladene Vorrichtung nach Anspruch 6 oder 7, wobei das elektrische Aufladesignal einen Aufladestrom, eine Aufladespannung, eine Aufladeleistung oder eine Änderungsgeschwindigkeit der Batteriekapazität der aufzuladenen Vorrichtung umfasst.

9. Aufzuladene Vorrichtung nach einem der Ansprüche 6 bis 8, wobei die Anzeigeeinheit (302) Folgendes umfasst:
eine statische Anzeigeuntereinheit (3021), die konfiguriert ist zum Darstellen, auf dem Anzeigebildschirm in einem statischen Grafikmodus, der elektrischen Signalstärke des kabellosen Aufladens an der momentanen Aufladeposition; und
eine dynamische Anzeigeuntereinheit (3022), die konfiguriert ist zum Darstellen, auf dem Anzeigebildschirm in einem dynamischen Grafikmodus, der elektrischen Signalstärke des kabellosen Aufladens an der momentanen Aufladeposition.

10. Aufzuladene Vorrichtung nach Anspruch 9, wobei der statische Grafikmodus einen Skaliermodus oder einen inkrementellen Spaltenmodus umfasst, und der dynamische Grafikmodus ein Anzeigemodus ist, bei dem ein grafisches Element, das die Aufladestärke darstellt, sich gemäß einer Größe der elektrischen Aufladesignalstärke konstant ändert.

11. Aufzuladene Vorrichtung nach einem der Ansprüche 6 bis 10, wobei die aufzuladene Vorrichtung ein mobiles Endgerät ist, das ein Anzeigemodul (402) und ein kabelloses Auflademodul (401) umfasst, wobei das kabellose Auflademodul Folgendes umfasst:
die Erlangungseinheit (4011); und
die Anzeigeeinheit (4012).

## Revendications

1. Procédé d'indication d'intensité de charge sans fil, comprenant :
l'obtention, par un dispositif chargé, de l'intensité du signal électrique de charge sans fil du dispositif chargé à une position de charge actuelle, et
l'affichage (203), sur un écran d'affichage du dispositif chargé, de l'intensité du signal électrique de charge sans fil à la position de charge actuelle, l'étape d'affichage de l'intensité du signal électrique de charge sans fil sur l'écran d'affichage étant destinée à fournir une base à un utilisateur pour sélectionner une position de charge,
**caractérisé en ce que** l'étape d'obtention, par le dispositif chargé, de l'intensité du signal électrique de charge sans fil du dispositif chargé à la position de charge actuelle comprend :
la détection (201), par le dispositif chargé, d'un signal électrique de charge à une position de charge initiale et du signal électrique de charge à la position de charge actuelle ; et
la réalisation, par le dispositif chargé, d'une opération de division sur le signal électrique de charge détecté à la position de charge actuelle et le signal électrique de charge à la position de charge initiale pour obtenir un résultat de calcul, et multiplier le résultat du calcul par une intensité de signal électrique de charge sans fil de référence à la position de charge initiale, pour obtenir l'intensité de charge sans fil à la position de charge actuelle.

2. Procédé d'indication d'intensité de charge sans fil selon la revendication 1, après la détection, par le dispositif chargé, du signal électrique de charge à la position de charge initiale, le procédé comprenant en outre :
le stockage, par le dispositif chargé, du signal électrique de charge à la position de charge initiale.

3. Procédé d'indication d'intensité de charge sans fil selon la revendication 1 ou 2, le signal électrique de charge comprenant un courant de charge, une tension de charge, une puissance de charge ou une vitesse de changement de la capacité de batterie du dispositif chargé.

4. Procédé d'indication d'intensité de charge sans fil selon l'une quelconque des revendications 1 à 3, l'étape d'affichage, sur l'écran d'affichage, de l'intensité de charge sans fil à la position de charge actuelle comprenant spécifiquement :
la présentation, sur l'écran d'affichage en mode graphique statique ou dynamique, de l'intensité du signal électrique de charge sans fil à la position de charge actuelle.

5. Procédé d'indication d'intensité de charge sans fil selon la revendication 4, le mode graphique statique comprenant un mode à échelle ou un mode à colonne incrémentielle, et le mode graphique dynamique étant un mode d'affichage dans lequel un élément graphique représentatif de l'intensité du signal électrique de charge change constamment selon une amplitude de l'intensité du signal électrique de charge.

6. Dispositif chargé, comprenant:
une unité d'obtention (301, 4011), configurée pour obtenir une intensité de signal électrique de charge sans fil du dispositif chargé à une position de charge actuelle ; et
une unité d'affichage (302, 4012), configurée pour afficher l'intensité du signal électrique de charge sans fil à la position de charge actuelle après que l'unité d'obtention a obtenu l'intensité du signal électrique de charge sans fil à la position de charge actuelle, l'affichage de l'intensité de charge sans fil sur un écran d'affichage étant destiné à fournir une base à un utilisateur pour choisir une position de charge optimum,
**caractérisé en ce que** l'unité d'obtention (301, 4011) comprend :
une sous-unité de détection (3011), configurée pour détecter un signal électrique de charge à une position de charge initiale et le signal électrique de charge à la position de charge actuelle ; et
une sous-unité de calcul (3012), configurée pour, après que la sous-unité de détection a détecté le signal électrique de charge à la position de charge actuelle, réaliser une opération de division sur le signal électrique de charge détecté à la position de charge actuelle et le signal électrique de charge à la position de charge initiale pour obtenir un résultat de calcul, et multiplier le résultat du calcul par une intensité de charge sans fil de référence à la position de charge initiale pour obtenir l'intensité de charge sans fil à la position de charge actuelle.

7. Dispositif chargé selon la revendication 6, l'unité d'obtention (301, 4011) comprenant en outre :
une sous-unité de stockage (3013), configurée pour stocker le signal électrique de signal électrique de charge à la position de charge initiale après que la sous-unité de détection détecte le signal électrique de signal électrique de charge à la position de charge initiale, lorsque la position de charge actuelle est la position de charge initiale.

8. Dispositif chargé selon la revendication 6 ou 7, le signal électrique de charge comprenant un courant de charge, une tension de charge, une puissance de charge ou une vitesse de changement de la capacité de la batterie du dispositif chargé.

9. Dispositif chargé selon l'une quelconque des revendications 6 à 8, l'unité d'affichage (302) comprenant :
une sous-unité d'affichage statique (3021), configurée pour présenter, sur l'écran d'affichage en mode graphique statique, l'intensité du signal électrique de charge sans fil à la position de charge actuelle ; et
une sous-unité d'affichage dynamique (3022), configurée pour présenter, sur l'écran d'affichage en mode graphique dynamique, l'intensité du signal électrique de charge sans fil à la position de charge actuelle.

10. Dispositif chargé selon la revendication 9, le mode graphique statique comprenant un mode à échelle ou un mode à colonne incrémentielle, et le mode graphique dynamique étant un mode d'affichage dans lequel un élément graphique représentatif de l'intensité de charge change constamment selon une amplitude de l'intensité du signal électrique de charge.

11. Dispositif chargé selon l'une quelconque des revendications 6 à 10, ledit dispositif chargé étant un terminal mobile comprenant un module d'affichage (402) et un module de charge sans fil (401), le module de charge sans fil comprenant :
ladite unité d'obtention (4011) ; et
ladite unité d'affichage (4012).
